(19)

Europäisches
Patentamt
European
Patent Office
Office européen
des brevets

(11) **EP 3 099 031 A1**

(12) **EUROPEAN PATENT APPLICATION**

(43) Date of publication:
**30.11.2016 Bulletin 2016/48**

(21) Application number: **15305794.8**

(22) Date of filing: **27.05.2015**

(51) Int Cl.:
*H04L 29/06* (2006.01)          *H04L 29/08* (2006.01)
*H04N 21/2187* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventors:
 • **Roelands, Marc
 2018 Antwerpen (BE)**

 • **Van Raemdonck, Wolfgang
 2018 Antwerpen (BE)**

(74) Representative: **Philippaerts, Yannick et al
Arnold & Siedsma
Bezuidenhoutseweg 57
2594 AC The Hague (NL)**

Remarks:
Amended claims in accordance with Rule 137(2)
EPC.

(54) **DELIVERING SERVICES BASED ON LIVE STREAMING DATA**

(57)     Method for delivering at least one service, the method comprising the steps of:
- processing live streaming data in at least one processing component using at least one of a set of stream processing services,

- replacing the at least one stream processing service by at least another stream processing service of the set of stream processing services based on a predetermined model.

$\{l, k, [t_n, t_m]\}$

$x_i$ at $t_i$

$Obs_{0'}()$

$Obs_0()$ → $p()$ → Ctrlr

$Obs_k()$

$Obs_1()$ → $f()$ → ...

$Obs_{k'}()$

$Obs_{1'}()$ → $g()$ → ...

FIG. 1

**Description**

Technical Field

The present invention relates to delivering a service. Preferably, the present invention relates to delivering cloud-based services based on live streaming data.

Background

In general there is a trend towards cloud-based execution of services. Together with the Internet of Things and other big data trends, there is an evolution to services acting more and more on live data. This implies that many service instances, varying in sources processed as well as service function, will be demanded to be processed concurrently in a cloud-based (or other) execution environment. In this context, the reduction of processing costs for this large amount of live data sources being demanded to be processed according to the function of a range of services is becoming critical to the business sustainability of the services and especially the platforms on which they are executed.

Smart ways to remove stream processing redundancies while services may not be specified in a non-redundant way, individually or in combination with other services or service instances, are needed.

It is an object of the present invention to provide a more optimal solution for providing services based on live streaming data.

Summary

To this end, the invention provides a method for delivering at least one service, the method comprising the steps of:

- processing live streaming data in at least one processing component using at least one of a set of stream processing services,
- replacing the at least one stream processing service by at least another stream processing service of the set of stream processing services based on a predetermined model.

According to the present invention, multiple stream processing services are available in a set. From this set, a stream processing service is selected based on a predetermined model. The effect is that based on the model, the delivering of the overall services can be optimized. In particular, some redundancies may be inherent to the overall set of stream sources, but they may not be considered in the service definitions. An example may be a known correlation between the source data, that can be modelled or is already known to a domain expert, but is not considered by a service designer. The invention allows to use the model to optimize the delivery of the service.

Preferably, the step of replacing comprises:

- predicting a future cost for each of the stream processing services of the set of stream processing services, based on the predetermined model and based on an input of the at least one stream processing service; and
- selecting the at least another stream processing services from the set of stream processing services based on the predicted future cost.

A cost based optimization of the delivered services is preferred preferably when a large amount of live streaming data is to be processed. Thereby, to obtain certain information from the data, or to deliver a predetermined service, multiple processing services can be used. Selecting the most cost-effective service based on a model has shown to significantly improve service costs. Alternatively or additionally, these 'rules' are reflecting part of a predetermined world model, which is then included as a predetermined 'observation equivalence function', which by means of the Obs0-processed data stream can be used to predict (timeslots in which segment-wise) equivalence is known to exist between Obs functions (also referred to as 'stream processing services' in the present description), 'equivalence' meaning that the two different Obs functions provide the same stream of data as an output, given the (current) stream of input data.

These 'rules' are thus captured inside a function p() which gives a stream of equivalence alerts (tuples expressing that 2 Obs functions are equivalent for a particular time interval in the future) to a 'controller'. The set of stream processing services is preferably defined based on these equivalences.

Then the formulas with cost functions comes into play: based on this stream of tuples the controller decides that in which future time interval which Obs function will be selected for operation in each service. The controller will do a lookup or calculation of the Cost functions for each Obs (and time interval) and select the most optimal plan for a number of these future time intervals.

Preferably the step of predicting comprises producing a tuple comprising a future timeslot and a preferred at least one stream processing services for delivering said at least one service during said future timeslot. Further preferably, multiple tuples are produces, relating to successive time intervals. Costs can be easily estimated in a time interval based on meta-information. By using time intervals, stream processing services can be assigned to a time interval and can be used in the time interval to optimize the service in terms of costs.

Preferably, resource reservations are made in the at least one processing components based on the produced tuple. By making resource reservations, processing can be further optimized by preventing processing hotspots or overload to happen.

Preferably the at least one service relates to retrieving predetermined information from video segments and wherein the live streaming data relates to live video. Further preferably, the predetermined information is chosen from location of predetermined objects or persons and density of objects or persons in a predetermined location. Processing live video data to retrieve information from the data is an important example of the invention where costs can be significantly reduced by taking account of a predetermined set of rules.

Alternatively, the at least one service relates to energy measurements and wherein the live streaming data relates to energy consumption related data. Energy consumption is another example of a domain where multiple streams of data can be analyzed to retrieve valuable information.

The invention further relates to a computer readable storage medium comprising instructions, which, when executed cause a data processing apparatus to carry out the steps of the method of the invention.

Brief description of the figures

Some embodiments of apparatus and/or methods in accordance with embodiments of the present invention are now described, by way of example only, and with reference to the accompanying drawings, in which:

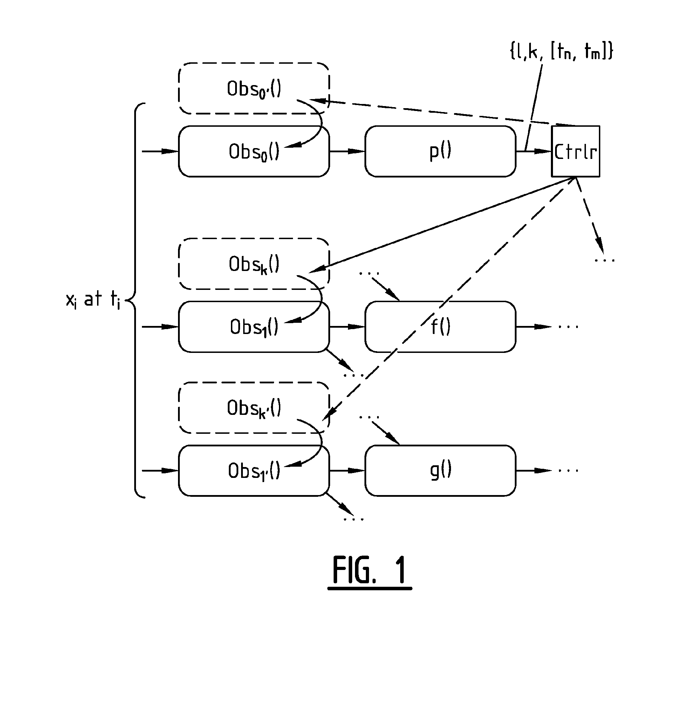

figure 1 illustrates an embodiment of the invention.

Detailed description of embodiments

Existing stream processing solutions, whether cloud-based or not, whether distributed or not, are either fully application-agnostic, and hence do not a-priori take into account world model-implied data redundancies, and so can only a posteriori during execution attempt to discover such redundancies, or are dedicated to a specific application and so cannot be used in more horizontal scenarios where services are added 'on demand' after the platform is deployed. As the trends indicate a need for service platforms, the present invention particularly relates to the first category.

The present invention proposes to define in the platform a (segment-wise) observation function equivalence function which can be leveraged by the system for any services / service instances that use a related observation function during service execution. By means of this world model, preferably based on domain expert-provided knowledge, the system can stall or substitute parts of the services for obtaining a lower processing cost during particular time segments as dynamically determined by a, preferably more lightweight, meta-observation-based prediction function which leverages the world model knowledge.

With reference to figure 1, observation function equivalence, preferably segment-wise, can concern the equivalence of functions all at least partially equivalently capable to observe current or future states of a particular phenomenon according to a world model. This model can be provided by a domain expert directly or otherwise generated in the system. A typical example where this can be applied is the observation of subjects/objects moving in geographical space by means of sensors/cameras placed, possibly also moving, in that geographical space, but it needs to be stressed that the value of the invention goes well beyond this family of examples and is generically applicable to any stream processing system for which some behavior is known or derivable for the world external to the system.

Formally the general solution is described as follows, with reference to figure 1:

$x_i$ is the vector of data samples available from the full collection/vector of data source streams x at time $t_i$.

$Obs_1()$ is an observation function that can calculate the *current* state of a particular given world phenomenon or situation based on the stream collection x. So the world phenomenon's state at $t_i$ is calculated by $Obs_1(x_i)$. A given service consists of the composition of $Obs_1()$, a function f() applied to $Obs_1()$, i.e. $f(Obs_1())$, and an arbitrary number of other functions (possibly including other observation functions). Other services are represented in the same way, using a composition of at least one observation function and other functions, and a number of service instances may have a common use of a particular observation function $Obs_1()$.

$Obs_k()$ for k=2..n are *potentially lower-processing cost* alternatives for $Obs_1()$ that can replace it *under certain (meta-)conditions* expressed by a meta-information stream concerning the said phenomenon. Thereby, $Obs_1()$ and $Obs_k()$ form part of a set of observation functions. In fact, $Obs_1()$ is not treated any different from the $Obs_k()$ for

k=2..n, except for the fact that it serves as a default choice that can be applied whenever no more cost-effective $Obs_i()$ can be used validly. I.e.: If a particular condition is met for $Obs_k()$ during a time interval $[t_m, t_n]$, then for all $t_i$ in that interval $Obs_1(x_i) = Obs_k(x_i)$, and so the system could substitute $Obs_1()$ by $Obs_k()$ without functional penalty during that execution time of the service, and a (processing or other) cost gain of $Cost[Obs_1()] - Cost[Obs_k()]$ (expressed as a monetary or equivalent unit per time unit) as determined at run time for the infrastructure at hand. $Obs_0()$ is a stream processing service, also referred to as an observation function, that can calculate the said meta-information stream about the said phenomenon, in such a way that it can be used as an argument to a function $p()$, i.e. $p(Obs_0())$, to *predict* for each $Obs_1$-alternative $Obs_k()$ any existing future time intervals $[t_m, t_n]$ in which $Obs_k()$ can be used invariantly to replace $Obs_1()$. The composed prediction function $p(Obs_0())$ is leveraging for the prediction of a world model of the phenomenon's behavior as provided by the domain expert (or derived in another way). I.e. $p(Obs_0(x))$ produces tuples of the form $\{k, [t_m, t_n]\}$ for which the system can timely decide on temporary substitution of $Obs_1()$ by $Obs_k()$ due to the property that for all $t_i$ during the time interval $[t_m, t_n]$ it holds that $Obs_1(x_i) = Obs_k(x_i)$. If applicable, e.g. in the case of multiple aspects of a phenomenon being observed in different services but similar parts of the input vector x being redundant for the respective observation functions according to an $Obs_0()$, the prediction function can be used for *multiple* sets of partially equivalent observation functions at once, using a generalized tuple of the form $\{l, k, [t_m, t_n]\}$ with l denoting the index shown in Fig. 1 as the indexing over the multiple substitutions 1 by k, 1' by k', etc..

A (possibly load-balanced and/or distributed) infrastructure function authorized to control activation / deactivation or deployment / undeployment of at least one stream processing service of the set of stream processing services across the execution infrastructure (Ctrlr) can thus use the time intervals issued by $p(Obs_0(x))$ for $Obs_k()$ to orchestrate substitutions of one or more running stream processing services (also referred to as observation functions) by $Obs_k()$ in the running services during those future intervals. $p(Obs_0())$ is configured to deliver such time intervals a sufficient time $t_0$ ahead and aims to predict relevant substitutions up to $t_0+1\Delta t_{Ctrlr}$ ahead, according to the timing desired by Ctrlr to perform the updates. $t_0$ can be current time (i.e. $t_i$ on which $p(Obs_0(x_i))$ is calculated) or a future time, as required by Ctrlr (Ctrlr may require a provisioning time $t_0$ for doing the substitutions.

Ctrlr can take into account (static or ad-hoc determined) cost estimates Cost[] for each $Obs_k()$ identified as a substitution candidate. As Ctrlr (by construction) keeps the overview of (dynamic) resource costs and current occupation, the combination of the live stream of tuples $\{l, k, [t_m, t_n]\}$ and the cost estimates $Cost[Obs_k()]$ for the execution during that same time interval allow Ctrlr to decide on the substitution for a desired time interval $[t_m, t_n]$ in the future, and Ctrlr can take decisions and make resource reservations accordingly.

An illustrative example of the principles described above and in relation to figure 1 is described hereafter. Consider a case where a range of cameras are used across a city to track vehicles for various purposes. One service tracks vehicles with particular license plates, another spots cars of a particular colour or other visual property, etc. and live video of the tracked vehicles is displayed as a service output. Observed phenomena in this case are the physical vehicles moving around the city. In this case, $p(Obs_0(x))$ can be a trajectory prediction function using city map data and e.g. current vehicle position or speed derived by $Obs_0(x)$ using the GPS position readings of the vehicle as part of x. Alternatively, e.g. in cases where positioning data of vehicles is not generally available to the system, video can also be used to do position and speed measurements based on camera inputs. This is a special case where $Obs_0(x)$ and $Obs_1(x)$ are partially overlapping functions.

An example $Obs_1()$ is taking all available camera streams in the city (in a particular sequence or partly or fully concurrently) and is doing the image recognition task needed for the service on all these streams, to eventually identify which streams show the vehicles with the requested property, displaying those as a service output. This is a naive, but illustrative example of $Obs_1()$ where it is obvious that a far better $Obs_2()$ can be devised which, using only a small subset of x, analyses only those streams of cameras that view part of the vicinity of the vehicle's current and shortly-anticipated position. $Obs_0()$ can thus suggest substitution of $Obs_1()$ by $Obs_k()$, with $Obs_k()$ here being a single parameterized function for each k taking a different region of camera views as corresponding to different position regions a vehicle can be in.

In this simple case the invention is trivial to apply, as a straightforward implementation could just combine $Obs_0()$ and $Obs_1()$ into one all-encompassing optimizing observation function. However, in more complicated cases, this straightforward approach is possibly broken due to several reasons:

- The functionality in $Obs_0()$ and the corresponding $Obs_k()$ for k=2..n may not be known or easily graspable by the service designer or may not be known at the time of service design - it may be added by a domain expert other than the service designer, or may be added later, after the service design is already in place (or even already running).
- The service designer (or likewise any domain expert) may not have insights in which alternatives for $Obs_1()$ may be less costly on a given infrastructure. The *cost associated* with particular functions $Obs_k()$ may indeed vary depending on the implementation of the execution infrastructure or its actual load. If not complicating the service design too much, a service designer may include queries to an *exposed cost checking* service of the infrastructure. But that would indeed be a functionality equivalent to a Ctrlr as foreseen in the invention.

As mentioned above for the example of position tracking via a range of cameras, $Obs_0()$ may functionally overlap with the function it is hinting to substitute. The cost reduction in this case can still occur, as $Obs_0()$ may in this way be *gradoally replaced by lower-cost functions* $Obs_0()$ as a way of *bootstrapping* predictor process. In the camera-based vehicle tracking, $Obs_0()$ can at first equal $Obs_1()$ which consults all cameras, and can then gradually be substituted with $Obs_k()$ which also substitutes $Obs_1()$, using a small selection of cameras.

The combination of the live stream of tuples $\{i, k, [t_m, t_n]\}$ and the cost estimates $Cost[Obs_k()]$ for the execution during those time intervals allow Ctrlr to decide on any substitution as proactively needed and planning ahead thanks to the fact that p() generates the stream of tuples indicating time intervals that are at least $t_0 + \Delta t_{Ctrlr}$ ahead of current time.

This can be done according to following procedure and criteria:

1) Segment the total interval $[t_0, t_0 + \Delta t_{Ctrlr}]$ according to all $t_n$ that are provided by p() as time interval starts or endings from the currently known tuples $\{i, k, [t_m, t_n]\}$, $t_0$ and $\Delta t_{Ctrlr}$ chosen for p() as suited for Ctrlr, and N denoting the resulting number of time segments (see hereunder for design considerations for determining $t_0$ and $\Delta t_{Ctrlr}$).

2) Consider all $Obs_k()$ that can validly be deployed or activated during the first of identified time segments, $[t_0, t_q]$, as well as all future valid substitutions for each consecutive time segment $[t_q, t_{q+1}]$ until $[t_{q+N-1}, t_0 + \Delta t_{Ctrlr}]$. By construction, the tuples for which the time interval includes a given time segment $[t_q, t_{q+1}]$ indicate which $Obs_k()$ can be validly applied for that time segment $[t_q, t_{q+1}]$. This thus defines a set of possible substitution sequences each consisting of the sequence of one chosen option out of the $Obs_k()$ for each time segment considered for the total interval $[t_0, t_0 + \Delta t_{Ctrlr}]$.

3) From the said set of substitution sequences, choose as the deployment/activation plan for the upcoming substitution the first next $Obs_k()$ to activate or deploy (or to keep active or deployed if no change is beneficial), by choosing the minimal overall cost, from calculating a cost metric for the whole plan for $[t_0, t_0 + \Delta t_{Ctrlr}]$, i.e. choose the substitution sequence that would result in minimal cost according to that metric. The cost metric is calculated as the minimum over all of these substitution sequences by, for each, summing over all time segments $[t_q, t_{q+1}]$ the execution cost $Cost[Obs_l()] * (t_{q+1} - t_q)$ + the associated activate/ deploy cost $D_{Obs-l}$ for the substituting $Obs_l()$ + the associated deactivate/undeploy cost $E_{Obs-k}$ for the $Obs_k()$ being substituted, for any effective substitutions (i.e. where $k \neq l$). I.e.:

$$\text{MIN}_{\text{identified sequences}}[\ \text{SUM}_{q=0..N-2}[\ Cost[Obs_l()] * (t_{q+1} - t_q) + (k \neq l)*(D_{Obs-l} + E_{Obs-k})\ ]\ ]$$

with $Obs_l()$ and $Obs_k()$ as short notations for the observation functions in each sequence candidate plan, for respectively the time segment $[t_q, t_{q+1}]$ and $[t_{q-1}, t_q]$, so varying in the formula according to identified sequence and q (i.e. $Obs_l()$ = observation function chosen for $[t_q, t_{q+1}]$ in a particular candidate sequence, and $Obs_k()$ = observation function chosen for $[t_{q-1}, t_q]$ in a particular candidate sequence or the currently executing one for $[t_{-1}, t_0]$).

The substitution sequence in the set resulting in the minimum cost value is selected as the plan, and at least the first $Obs_k()$ in that sequence, i.e. for $[t_0, t_q]$, is effectively decided to be used in a substitution. A design option for the Ctrlr is to also follow the plan for part or all of the later substitutions in the plan without considering potential further input tuples from p(), or either redoing the calculation using any new tuple inputs that p() can timely provide for the remaining part of $[t_0, t_0 + \Delta t_{Ctrlr}]$. I.e. Ctrlr can be chosen to wait a time $\Delta t_{Plan} \leq \Delta t_{Ctrlr}$ before re-evaluating the plan, using the current plan for substitution until $\Delta t_{Plan}$ and only using further tuples provided by p() after that time.

Note also that the cost minimization may also lead to the conclusion to keep using a valid $Obs_k()$ (or the default $Obs_k()$) for a longer time because short time segments may lead to cost increases $Cost[Obs_l()] * (t_{q+1} - t_q)$ that are smaller than the $D_{Obs-l} + E_{Obs-k}$ implied by and added to it. The cost minimization metric thus automatically covers this behaviour of avoiding "too quick or short to be economic" substitutions, and will identify the (part of) the sequence that does not substitute if possible in such case thanks to the inclusion of $(k \neq l)*(D_{Obs-l} + E_{Obs-k})$ in the formula.

4) Repeat this back from 1) at the event of every newly identified tuple, or optionally after the said waiting time $\Delta t_{Plan}$. The decision to only re-evaluate the substitution plan after $\Delta t_{Plan}$ allows also the processing of $p(Obs_0(x))$ to be relaxed: $p(Obs_0(x))$ can either keep generating tuples continuously as it can, or can collect or skip observation data and also re-evaluate only after a time $\Delta t_{Plan}$. The design choice of what to take as $\Delta t_{Plan}$ needs to consider 1) that at least a substitution plan needs to be available at any time for the current time unless it is accepted that the method is not used during some time with fallback to the default $Obs_1()$, i.e. $\Delta t_{Plan} \leq \Delta t_{Ctrlr}$ or the substitution method is not used for a time $\Delta t_{Plan} - \Delta t_{Ctrlr}$ and 2) that the substation plan may miss opportunities to optimize based on world state by ignoring updates that can be done by means of p() during $[t_0 + \Delta t_{Plan}, t_0 + \Delta t_{Ctrlr}]$, with that chance becoming

larger the larger $\Delta t_{Plan}$ is chosen. A design choice thus may be to choose a $\Delta t_{Plan}$ corresponding to the typical predictive capabilities of the considered predictor functions, or to match it specifically to the predictive capacity of each used prediction function.

A simplification of the procedure can be done by considering only the earliest substitution in step 2, i.e. for segment $[t_0, t_1]$ using only a single tuple $\{i, k, [t_0, t_1]\}$ from p() without considering any future substitution candidates yet, and so having also only single-substitution sequences in step 3. This allows considering a *variable* $\Delta t_{Ctrlr}$ determined by $t_1$ as provided by p() in the tuple $\{i, k, [t_0, t_1]\}$.

In general, design considerations for determining $t_0$ and $\Delta t_{Ctrlr}$ are that $t_0$ is a real requirements imposed by the execution infrastructure, determined by the worst case time the system requires to do any provisioning for activating or deploying a new observation function (e.g. deploying code on a machine, or propagating routing policy setting over a set of routers in a network), while $t_0+\Delta t_{Ctrlr}$ needs to strike a balance between the predictive capacity of p(), the expected natural speed of status changes of the observed world phenomena, both suggesting possibly lower values for $\Delta t_{Ctrlr}$, and the optimization advantage of planning ahead in the Ctrlr, suggesting higher $\Delta t_{Ctrlr}$ values.

Note that in general the functions $Obs_k()$ do not need to be "pure" functions in the mathematical or functional programming sense, i.e. they may have internal state that needs to be "handed over" in some way from a substituted to a substituting $Obs_k()$. As a general mechanism for this, all $Obs_k()$ functions may have an additional input in which a substituted $Obs_k()$ can pass its internal state to the substituting $Obs_k()$. This can be done by means of a shared model among the collection of $Obs_k()$ instances of each type, e.g. formulated based on the input stream and output stream types already common to this function collection. The resource costs associated with this can be included in $D_{Obs-k}$ and $E_{Obs-k}$. It is clear that these costs can be made smaller by considering minimal-state or even stateless, i.e. "pure" functions for $Obs_k()$.

The method proposed by this invention is beneficial in cases where the cost gain obtainable by the dynamic substitutions outweighs the additional cost introduced by the method itself. An indication for this can be expressed as the requirement that:

$SUM_{\text{over all Obs-0-role instances}} (Cost[p(Obs_0())]) + Cost[Ctrlr]$

$<$

$SUM_{\text{over all Obs-0-role instances}}($

$SUM_{\text{over all Obs-1-role instances for the Obs-0}}($

$Cost[Obs_1()]$

$- Average_{\text{long time Obs-1}}[MIN_{\text{identified sequences}}[SUM_{q=0..N-2}[Cost[ObS_l()] * (t_{q+1} - t_q) + (k{\neq}l)*(D_{Obs-l} + E_{Obs-k})]]]))$

where $SUM_{\text{over all Obs-0-role instances}}$ denotes the sum of the contained expressions over the index of all Obs-0-role instances anticipated to be executed on the concerned system (i.e. when method of the invention is used),

and where $SUM_{\text{over all Obs-1-role instances for the Obs-0}}$ denotes the sum of the contained expressions over all Obs-1-role instances that are controlled by $Obs_0()$, (The number of terms in this sum can be seen as the *reuse factor* of $Obs_0()$, of which higher values influence the applicability of the method positively.)

and where $Average_{\text{over long time Obs-1}}$ denotes the average of the contained expressions over a long time period with the observation functions in the expression being prediction-indicated time-segment-wise equivalent substitutions for $Obs_1()$. The expression used here over which $Average_{\text{over long time Obs-1}}$ averages is the minimal cost deployments/activations decided upon by Ctrlr.

Such cases exist especially where there is sufficient real world phenomena behavioural knowledge or models captured in p(), such that

- $p(Obs_0())$ can be the tracking of a phenomenon property that is less expensive then the $Obs_k()$ it triggers the substitutions for (which are tracking another more heavyweight property that can be correlated to the lightweight phenomenon property), and/or
- $p(Obs_0())$ can trigger substitutions for multiple types of $Obs_k()$ planned to be executed in the system, i.e. a high reuse factor.

As already discussed with respect to the illustrative example, $Obs_0()$ can also be a subpart of $Obs_1()$, or evolve from being identical to $Obs_1()$ into substitutions $Obs_{0'}()$ for $Obs_0()$ that are subparts of $Obs_1()$.

An $Obs_k()$ at some stage used in the system as a substitution can be a *constant function* (i.e. producing a predetermined outcome regardless of the input x). This type of $Obs_k()$, as well as other special-property $Obs_k()$ types, may be known to predetermine the outcome of a function f() applied to the $Obs_k()$ outcome in a service, implying that when $Obs_k()$ is used as a substitution, also f() can be substituted by a function of lower cost. The substitution mechanism can thus include this by extending the substitution to $f'(Obs_k())$, where f'() is the corresponding lower cost equivalent of f().

The Cost[] function can entail any kind of resource costs as used by the execution of the contained function expression. This may be processing costs, memory or storage lease costs, or costs of reserved paths through a network with QoS guarantees or more advanced flow control or SDN infrastructure. The Cost[] function even could also consider "infinitely high" cost outcomes, so as to express e.g. a case where an $Obs_1()$ *cannot* be calculated (i.e. at finite cost) in a time interval where required observation data is not available. An example in geo-tracking is e.g. that no cameras are available along parts of the predicted trajectory of a tracked subject, but alternative localization observation is available (or visa versa). On these parts of the trajectory the known unavailable observation method (in this case for physical world reason, but any cause is possible here) can be expressed to have a very high cost which excludes it automatically from selection.

The invention can be implemented on many technologies, using many programming languages or executable representation for functions and services, with deployment or activation on many kinds of execution environment, such as general purpose computers, cloud infrastructure or communication networks.

An embodiment can be implemented e.g. using a camera network, a video processing infrastructure and a general purpose event processing environment for realizing p() and Ctrlr, doing video observation/tracking of objects across the geographically spread camera network, using a lightweight $p(Obs_0())$ tracking and predicting object location, according to the parameters of a particular request (a pedestrian, a car or other vehicle type with a particular color, licence plate, etc.) corresponding to a targeted service instance.

With respect to world model phenomena behaviour, virtually any application domain may be applicable, as there is very often leveragable parts of a world model available or derivable in a prediction function, such as weather or other natural phenomena, behaviour of an infrastructure (communication or other), behaviour of physical objects in geographical space, or many other more abstract phenomena for which a behavioural consistency can be expressed.

Further embodiment examples are using $Obs_k()$ instances as abstraction for particular configuration instances provisioning one or more particular flows or other (SDN or QoS) configuration in a network.

Alternatively, in city traffic management, a traffic jam may be observable in various ways (by video analysis, road car density sensing, car position/speed tracking, car break use monitoring, etc.). However for a given road segment or crossroad, authorities may know as a 'rule' of the world that between particular hours the given road segment or crossroad is always in a traffic jam status. In such case, $p(Obs_0())$ can indicate during known traffic jam times the substitution of any traffic jam observation function by a lower-processing equivalent that directly outputs a traffic jam indication for any crossroads or road segments known to have that condition during particular time intervals, instead of doing more complicated observation analysis.

The present invention is beneficial in cases where the cost gain obtainable by the dynamic substitutions outweighs the additional cost introduced by the method itself. An indication for this can be expressed as the requirement that:

$$SUM_{\text{over all Obs-0-role instances}} (Cost[p(Obs_0())]) + Cost[Ctrlr]$$
$$<$$
$$SUM_{\text{over all Obs-0-role instances}}($$
$$SUM_{\text{over all Obs-1-role instances for the Obs-0}}($$
$$Cost[Obs_1()]$$
$$- Average_{\text{long time Obs-1}}[ MIN_{\text{identified sequences}}[ SUM_{q=0..N-2}[ Cost[Obs_1()] * (t_{q+1} - t_q) + (k{\neq}l)*(D_{Obs-l} + E_{Obs-k})]]]]))$$

An operator of a (cloud-based or other) service platform or network infrastructure can thus support services at a lower cost as indicated by the formula. The benefit lies in the method being able to a posteriori leverage world model knowledge upon an already supported (or even already running) range of services.

A number of trends push the demand for using the present invention, going beyond 'blind' optimisation techniques, examples of which are given hereunder:

- A large operator infrastructure is bound to require supporting a very broad range of ad-hoc issuable service types.
- Stream processing resources may become scarce under the rising amount of streaming services being envisioned.
- Analytics and machine learning techniques allow for the systematic collection of data allowing for the identification of world model phenomena behavioural properties. This knowledge being more and more available becomes actionable for resource use optimization as with this method. The method thus becomes an attractive solution.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.  Method for delivering at least one service, the method comprising the steps of:

    - processing live streaming data in at least one processing component using at least one of a set of stream processing services,
    - replacing the at least one stream processing service by at least another stream processing service of the set of stream processing services based on a predetermined model.

2.  Method according to claim 1, wherein the step of replacing comprises:

    - predicting a future cost for each of the stream processing services of the set of stream processing services, based on the predetermined model and based on an input of the at least one stream processing service; and
    - selecting the at least another stream processing services from the set of stream processing services based on the predicted future cost.

3.  Method according to claim 1 or 2, wherein the predetermined model comprises a set of rules for selecting services as being part of the set of stream processing services.

4.  Method according to claim 3, wherein the set of rules uses a meta-information stream as input for selecting the services from the set of stream processing services.

5.  Method according to any one of the previous claims, wherein the set of stream processing services comprise stream processing services having a predetermined equivalence.

6.  Method according to any one of the claims 2-5, wherein the step of predicting comprises producing a tuple comprising a future timeslot and a preferred at least one stream processing services for delivering said at least one service during said future timeslot.

7.  Method according to claim 6, wherein multiple tuples are produced, relating to successive time intervals.

8.  Method according to claim 6, wherein multiple tuples are produced, relating to multiple concurrent overall services.

9.  Method according to any one of the claims 6 to 8, wherein resource reservations are made in the at least one processing components based on the produced tuple.

10. Method according to any one of the claims 6 to 8, wherein an overall cost function derives partial cost results from actual resource occupation.

11. Method according to any one of the previous claims, wherein the at least one service relates to retrieving predetermined information from video segments and wherein the live streaming data relates to live video.

12. Method according to claim 11, wherein the predetermined information is chosen from location of predetermined objects or persons and density of objects or persons in a predetermined location.

13. Method according any one of the claims 1-10, wherein the at least one service relates to energy measurements and wherein the live streaming data relates to energy consumption related data.

14. A computer readable storage medium comprising instructions, which, when executed cause a data processing apparatus to carry out the steps of the method of any one of the previous claims.

15. Device for delivering at least one service, the device comprising:

- at least one processing component adapted for processing live streaming data using at least one of a set of stream processing services,
- a decision module adapted for replacing the at least one stream processing service by at least another stream processing service of the set of stream processing services based on a predetermined model.

**Amended claims in accordance with Rule 137(2) EPC.**

1. Method for delivering at least one service, the method comprising the steps of:

- processing live streaming data in at least one processing component using at least one of a set of stream processing services,
- replacing the at least one stream processing service by at least another stream processing service of the set of stream processing services based on a predetermined model, wherein the step of replacing comprises:
- predicting a future cost for each of the stream processing services of the set of stream processing services, based on the predetermined model and based on an input of the at least one stream processing service; and
- selecting the at least another stream processing services from the set of stream processing services based on the predicted future cost.

2. Method according to claim 1, wherein the predetermined model comprises a set of rules for selecting services as being part of the set of stream processing services.

3. Method according to claim 2, wherein the set of rules uses a meta-information stream as input for selecting the services from the set of stream processing services.

4. Method according to any one of the previous claims, wherein the set of stream processing services comprise stream processing services having a predetermined equivalence.

5. Method according to any one of the claims 1-4, wherein the step of predicting comprises producing a tuple comprising a future timeslot and a preferred at least one stream processing services for delivering said at least one service during said future timeslot.

6. Method according to claim 5, wherein multiple tuples are produced, relating to successive time intervals.

7. Method according to claim 5, wherein multiple tuples are produced, relating to multiple concurrent overall services.

8. Method according to any one of the claims 5 to 7, wherein resource reservations are made in the at least one processing components based on the produced tuple.

9. Method according to any one of the claims 5 to 7, wherein an overall cost function derives partial cost results from actual resource occupation.

10. Method according to any one of the previous claims, wherein the at least one service relates to retrieving predetermined information from video segments and wherein the live streaming data relates to live video.

11. Method according to claim 10, wherein the predetermined information is chosen from location of predetermined objects or persons and density of objects or persons in a predetermined location.

12. Method according any one of the claims 1-9, wherein the at least one service relates to energy measurements and wherein the live streaming data relates to energy consumption related data.

13. A computer readable storage medium comprising instructions, which, when executed cause a data processing apparatus to carry out the steps of the method of any one of the previous claims.

14. Device for delivering at least one service, the device comprising:

- at least one processing component adapted for processing live streaming data using at least one of a set of stream processing services,
- a decision module adapted for replacing the at least one stream processing service by at least another stream processing service of the set of stream processing services based on a predetermined model, wherein the decision module comprises:
- a predicting module for predicting a future cost for each of the stream processing services of the set of stream processing services, based on the predetermined model and based on an input of the at least one stream processing service; and
- a selector for selecting the at least another stream processing services from the set of stream processing services based on the predicted future cost.

## FIG. 1

**Europäisches Patentamt**
**European Patent Office**
**Office européen des brevets**

# EUROPEAN SEARCH REPORT

Application Number

EP 15 30 5794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/063086 A2 (MICROSOFT CORP [US]) 24 April 2014 (2014-04-24) * page 2, paragraph 11 - page 5, paragraph 19 * * page 6, paragraph 22 - page 9, paragraph 29 * * page 10, paragraph 31 - page 13, paragraph 38 * | 1-15 | INV. H04L29/06 H04L29/08 H04N21/2187 |
| X | WO 2011/076236 A1 (ERICSSON TELEFON AB L M [SE]; VANDIKAS KONSTANTINOS [DE]; LEVENSHTEYN) 30 June 2011 (2011-06-30) * abstract * * page 14, line 6 - page 18, line 28 * * page 19, line 24 - page 21, line 8; claims 1, 8 * | 1-15 | |
| | | | TECHNICAL FIELDS SEARCHED (IPC) H04L H04N |

The present search report has been drawn up for all claims

| Place of search | Date of completion of the search | Examiner |
|---|---|---|
| The Hague | 5 November 2015 | Karavassilis, Nick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5794

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2015

| Patent document cited in search report | Publication date | Patent family member(s) | | Publication date |
|---|---|---|---|---|
| WO 2014063086 A2 | 24-04-2014 | AU | 2013331076 A1 | 12-03-2015 |
| | | CA | 2884885 A1 | 24-04-2014 |
| | | CN | 104737093 A | 24-06-2015 |
| | | EP | 2909697 A2 | 26-08-2015 |
| | | KR | 20150084799 A | 22-07-2015 |
| | | US | 2014115372 A1 | 24-04-2014 |
| | | WO | 2014063086 A2 | 24-04-2014 |
| WO 2011076236 A1 | 30-06-2011 | EP | 2517157 A1 | 31-10-2012 |
| | | JP | 5596173 B2 | 24-09-2014 |
| | | JP | 2013515987 A | 09-05-2013 |
| | | US | 2013013444 A1 | 10-01-2013 |
| | | WO | 2011076236 A1 | 30-06-2011 |

EPO FORM P0459

For more details about this annex : see Official Journal of the European Patent Office, No. 12/82